# EUROPEAN PATENT APPLICATION

(11) **EP 4 503 308 A1**
(43) Date of publication of application: **05.02.2025**
(21) Application number: 23851417.8
(22) Date of filing: 28.06.2023
(51) Int. Cl.: H01M 50/457, H01M 50/46, H01M 10/0567

(54) **SEPARATOR AND BATTERY COMPRISING SAME**

(30) Priority: 12.08.2022 CN 202210971575
(71) Applicant: Zhuhai CosMX Battery Co., Ltd., Zhuhai, Guangdong 519180 (CN)
(72) Inventor: MU, Yingdi, Zhuhai, Guangdong 519180 (CN); CAO, Xiaodong, Zhuhai, Guangdong 519180 (CN); WANG, Hai, Zhuhai, Guangdong 519180 (CN); LI, Suli, Zhuhai, Guangdong 519180 (CN)
(74) Representative: Murgitroyd & Company
(86) International application number: PCT/CN2023/103292
(87) International publication number: WO 2024/032190

(57) **Abstract**

Disclosed are a separator and a battery including the same. An adhesive layer of the separator includes a composite material with a fibrous core-shell structure. In the composite material with a fibrous core-shell structure, the nitrogen-containing phosphate compound is encapsulated in a vinylidene fluoride polymer. When the battery is used at room temperature, the encapsulation structure is stable, the nitrogen-containing phosphate compound is encapsulated in the vinylidene fluoride polymer and stably exists in the separator, without affecting the electrical performance of the battery. In addition, the fibrous vinylidene fluoride polymer can perform excellent at bonding, and tightly bonds the separator to the positive electrode plate and negative electrode plate together, ensuring that the battery does not deform during the cycle. The battery can effectively improve the safety performance while taking into account performance of the battery at high and low temperatures.

## Description

### FIELD OF THE INVENTION

The present disclosure relates to the technical field of lithium-ion batteries, and in particular to a separator and a battery including the separator. The battery is a high-voltage battery with high safety performance.

### BACKGROUND OF THE INVENTION

In recent years, lithium-ion batteries have been widely used in areas such as smartphones, tablet computers, smart wearables, electric tools, and electric vehicles. With the widespread use of lithium-ion batteries, consumer demands for usage environment of lithium-ion batteries is constantly increasing. This requires that lithium-ion batteries should be highly safe while taking into account performance at high and low temperatures.

At present, the use of lithium-ion batteries poses safety hazards. For example, the lithium-ion batteries under extreme conditions like prolonged high temperatures are prone to severe accidents including fire and even explosion. One of the main reasons for these safety hazards is that the cathode material is structurally unstable under high temperature and high voltage. Metal ions are prone to precipitating from the cathode solution and then is reduced and deposited on the anode surface. This causes damage to the structure of the anode SEI film and consequent increase in anode impedance and thickness of the battery. As a result, the battery temperature is rising, and the accumulated heat fails to be released, resulting in safety accidents. Another of the main reasons for these safety hazards is that the electrolyte solution is prone to decomposition at high temperature and high voltage. The electrolyte solution likely oxidizes on the cathode surface to produce a large amount of gas. This results in battery swelling and destruction of the electrode interface and consequent deterioration in safety performance of the battery.

In view of this, there is an urgent need to develop high-voltage lithium-ion batteries with high safety. For example, adding flame retardants (for example, trimethyl phosphate) to the electrolyte solution can improve the safety performance. However, the use of these additives frequently leads to severe degradation of battery performance. Therefore, the priority is to develop high-voltage lithium-ion batteries that are highly safe without adversely affecting their electrochemical performance.

### BRIEF DESCRIPTION OF THE INVENTION

The purpose of the present disclosure is to provide a separator and a battery including the separator, so as to solve the problem such as safety risks and the inability to balance safety performance with electrochemical performance of the existing batteries during use. The separator is designed to protect the battery against deformation. The battery is a high-voltage battery with high safety performance and exhibiting excellent performance at high and low temperatures.

The purpose of the present disclosure is achieved through the following technical solutions.

A separator is provided. The separator includes a substrate, a ceramic layer, and an adhesive layer. The ceramic layer is disposed on a first surface of the substrate, and the adhesive layer is disposed on a second surface, opposite to the first surface, of the substrate and on a surface of the ceramic layer. Alternatively, the ceramic layer is disposed on the first surface and the second surface opposite to the first surface of the substrate, and the adhesive layer is disposed on surfaces of the ceramic layer.

The adhesive layer is made of composite material with a fibrous core-shell structure. The fibrous core-shell structure includes a fibrous core and a shell that envelops the fibrous core. The shell is made of material including vinylidene fluoride polymer. The fibrous core is made of material including nitrogen-containing phosphate compound.

According to an embodiment of the present disclosure, the vinylidene fluoride polymer refers to a class of copolymers containing polyvinylidene fluoride monomer, which may be a homopolymer of polyvinylidene fluoride or a copolymer of polyvinylidene fluoride with other monomers. The copolymer may be a random copolymer or a block copolymer.

According to an embodiment of the present disclosure, the substrate is selected from one or more of polyethylene, polypropylene, multilayers of polyethylene and polypropylene, a blend of polyethylene and polypropylene, polyimide, polyamide, or aramid.

According to an embodiment of the present disclosure, the ceramic layer includes ceramic, a binder, a thickener, and a wetting agent.

According to an embodiment of the present disclosure, the ceramic is selected from one or more of alumina, boehmite, silicon oxide, titanium oxide, magnesium oxide or magnesium hydroxide.

According to an embodiment of the present disclosure, the binder is selected from one or more of polytetrafluoroethylene, polyvinylidene fluoride, polyvinylidene fluoride-hexafluoropropylene copolymer, polyimide, polyacrylonitrile, polymethyl acrylate, or polymethyl methacrylate.

According to an embodiment of the present disclosure, the thickener is selected from one or two of sodium carboxymethyl cellulose, polyacrylamide, polyurethane, bentonite, lithium carboxymethyl cellulose, or the like.

According to an embodiment of the present disclosure, the wetting agent is selected from one or more polymer materials such as polypropylene vinyl ether and its derivatives, polyvinyl alcohol, or polyethers.

According to an embodiment of the present disclosure, the ceramic layer includes the following components in percentage by weight: 70-97 wt% of ceramic, 1-15 wt% of binder, 0.5-10 wt% of thickener, and 0.1-5 wt% of wetting agent.

Preferably, the ceramic layer includes the following components in percentage by weight: 74-84 wt% of ceramic, 10-15 wt% of binder, 5-8 wt% of thickener, and 1-3 wt% of wetting agent.

According to an embodiment of the present disclosure, the vinylidene fluoride polymer is selected from one or more of polyvinylidene fluoride (PVDF for short), a copolymer of polyvinylidene fluoride and hexafluoropropylene (PVDF-HFP for short), a copolymer of vinylidene fluoride and trifluoroethylene and a copolymer of vinylidene fluoride and tetrafluoroethylene.

According to an embodiment of the present disclosure, a mass ratio of the shell to the fibrous core ranges from 0.25:1 to 4:1, more preferably from 0.5:1 to 3:1, for example, 0.25:1, 0.5:1, 1:1, 2:1, 3:1 or 4:1.

According to an embodiment of the present disclosure, a melting point of the vinylidene fluoride polymer ranges from 90°C to 140°C, for example, 90°C, 100°C, 113°C, 128°C, 135°C or 140°C.

According to an embodiment of the present disclosure, a weight-average molecular weight of the vinylidene fluoride polymer ranges from 100,000 Da to 1,000,000 Da, for example, 100,000 Da, 150,000 Da, 300,000 Da, 500,000 Da, 800,000 Da or 1,000,000 Da.

According to an embodiment of the present disclosure, a thickness of the substrate ranges from 3 µm to 20 µm, for example, 3 µm, 4 µm, 5 µm, 8 µm, 10 µm, 15 µm, 18 µm or 20 µm.

According to an embodiment of the present disclosure, a thickness of the ceramic layer ranges from 0.5 µm to 5 µm, for example, 0.5 µm, 1 µm, 2 µm, 3 µm, 4 µm or 5 µm.

According to an embodiment of the present disclosure, a thickness of the adhesive layer ranges from 0.3 µm to 3 µm, for example, 0.3 µm, 0.5 µm, 0.8 µm, 1 µm, 1.2 µm, 1.5 µm, 1.8 µm, 2 µm or 3 µm.

According to an embodiment of the present disclosure, the composite material in the fibrous core-shell structure has a diameter ranging from 0.1 µm to 3 µm, for example, 0.1 µm, 0.2 µm, 0.5 µm, 1 µm, 2 µm or 3 µm.

According to an embodiment of the present disclosure, a length-to-diameter ratio of the composite material in the fibrous core-shell structure ranges from 10 to 10,000, for example, 10, 20, 50, 100, 200, 2000, 5000, 8000 or 10,000.

According to an embodiment of the present disclosure, the nitrogen-containing phosphate compound has a structural formula shown in Formula 1:

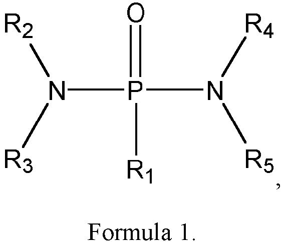

In Formula 1, R₁ is selected from substituted or unsubstituted amino, substituted or unsubstituted C₁₋₁₀ alkoxy, halogen, substituted or unsubstituted nitrogen-containing heterocyclic group, and a substituent is C₁₋₁₀ alkyl or C₆₋₁₀ aryl.

R₂ and R₃ are the same or different and are independently selected from substituted or unsubstituted C₁₋₁₀ alkyl, substituted or unsubstituted C₂₋₁₀ alkenyl, substituted or unsubstituted C₂₋₁₀ alkynyl, or C₆₋₁₀ aryl, and a substituent is C₁₋₁₀ alkyl or halogen. Alternatively, R₂ and R₃ are connected to each other to form a substituted or unsubstituted nitrogen-containing heterocyclic group, or a substituted or unsubstituted nitrogen-containing sulfur heterocyclic group.

R₄ and R₅ are the same or different and are independently selected from substituted or unsubstituted C₁₋₁₀ alkyl, substituted or unsubstituted C₂₋₁₀ alkenyl, substituted or unsubstituted C₂₋₁₀ alkynyl, or C₆₋₁₀ aryl, and a substituent is C₁₋₁₀ alkyl or halogen. Alternatively, R₄ and R₅ are connected to each other to form a substituted or unsubstituted nitrogen-containing heterocyclic group, or a substituted or unsubstituted nitrogen-containing sulfur heterocyclic group.

According to an embodiment of the present disclosure, in Formula 1, R₁ is selected from substituted or unsubstituted amino, substituted or unsubstituted C₁₋₆ alkoxy, halogen, substituted or unsubstituted nitrogen-containing 3- to 6- membered heterocyclic group, and a substituent is C₁₋₆ alkyl or C₆₋₈ aryl.

R₂ and R₃ are the same or different and are independently selected from substituted or unsubstituted C₁₋₆ alkyl, substituted or unsubstituted C₂₋₆ alkenyl, substituted or unsubstituted C₂₋₆ alkynyl, or C₆₋₈ aryl, and a substituent is C₁₋₆ alkyl or halogen. Alternatively, R₂ and R₃ are connected to each other to form a substituted or unsubstituted nitrogen-containing 3- to 6-membered heterocyclic group, or a substituted or unsubstituted nitrogen-sulfur-containing 3- to 6-membered heterocyclic group.

R₄ and R₅ are the same or different and are independently selected from substituted or unsubstituted C₁₋₆ alkyl, substituted or unsubstituted C₂₋₆ alkenyl, substituted or unsubstituted C₂₋₆ alkynyl, or C₆₋₈ aryl, and a substituent is C₁₋₆ alkyl or halogen. Alternatively, R₄ and R₅ are connected to each other to form a substituted or unsubstituted nitrogen-containing 3- to 6-membered heterocyclic group, or a substituted or unsubstituted nitrogen-sulfur -containing 3- to 6- membered heterocyclic group.

According to an embodiment of the present disclosure, in Formula 1, R₁ is selected from substituted or unsubstituted amino, halogen, or substituted or unsubstituted nitrogen-containing 3 membered heterocyclic group, and a substituent is C₁₋₄ alkyl or phenyl.

R₂ and R₃ are the same or different and are independently selected from substituted or unsubstituted C₁₋₄ alkyl, substituted or unsubstituted C₂₋₃ alkenyl, substituted or unsubstituted C₂₋₃ alkynyl, or phenyl, and a substituent is C₁₋₃ alkyl or a halogen. Alternatively, R₂ and R₃ are connected to each other to form a substituted or unsubstituted nitrogen-containing 3 membered heterocyclic group or a substituted or unsubstituted nitrogen-sulfur-containing 5 membered heterocyclic group.

R₄ and Rs are the same or different and are independently selected from substituted or unsubstituted C₁₋₄ alkyl, substituted or unsubstituted C₂₋₃ alkenyl, substituted or unsubstituted C₂₋₃ alkynyl, or phenyl, and a substituent is C₁₋₃ alkyl or halogen. Alternatively, R₄ and R₅ are connected to form a substituted or unsubstituted nitrogen-containing 3 membered heterocyclic group, or a substituted or unsubstituted nitrogen-sulfur-containing 5 membered heterocyclic group.

According to an embodiment of the present disclosure, in Formula 1, R₁ is selected from substituted amino, fluorine, or a nitrogen-containing 3 membered heterocyclic group, and a substituent is methyl, ethyl, propyl, butyl, or phenyl.

R₂ and R₃ are the same or different and are independently selected from methyl, ethyl, propyl, butyl, allyl, or phenyl. Alternatively, R₂ and R₃ are connected to form a nitrogen-containing 3 membered heterocyclic group or a nitrogen-sulfur-containing 5 membered heterocyclic group.

R₄ and R₅ are the same or different and are independently selected from methyl, ethyl, propyl, butyl, allyl, or phenyl. Alternatively, R₄ and R₅ are connected to form a nitrogen-containing 3 membered heterocyclic group or a nitrogen-sulfur-containing 5 membered heterocyclic group.

According to the embodiment of the present disclosure, the nitrogen-containing phosphate compound is selected from at least one of the compounds shown in Formula 1-1 to Formula 1-6:

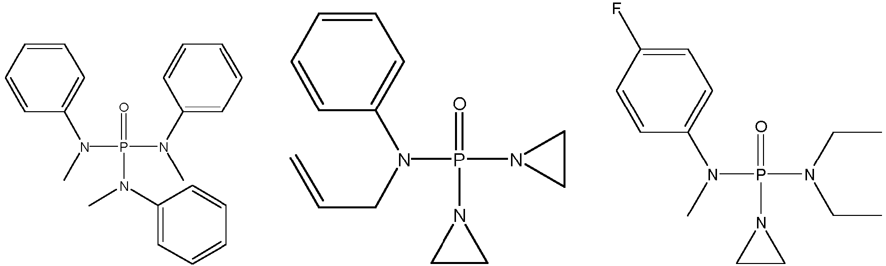

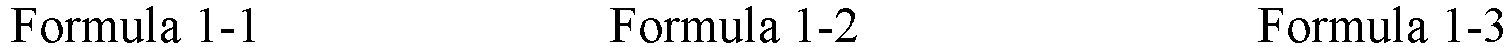

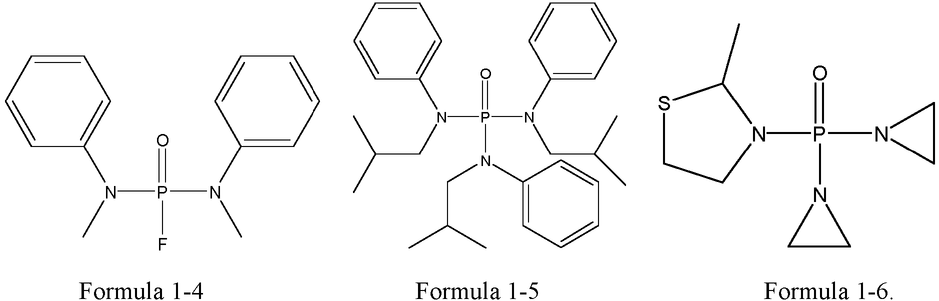

According to the embodiment of the present disclosure, the nitrogen-containing phosphate compound may be prepared by methods known in the art, or purchased through commercial approaches.

The present disclosure also provides a battery, which includes the separator.

According to an embodiment of the present disclosure, the battery further includes a positive electrode plate, a negative electrode plate and an electrolyte solution.

According to an embodiment of the present disclosure, the electrolyte solution includes an organic solvent, an additive and lithium salts, where the additive includes a nitrile compound and lithium tetrafluoroborate.

According to the embodiments of the present disclosure, the additive may be prepared by methods known in the art, or purchased through commercial approaches.

According to an embodiment of the present disclosure, the nitrile compound is selected from at least one of 3-methoxypropionitrile, succinonitrile, adiponitrile, ethylene glycol bis(propionitrile) ether, 1,3,6-hexanetrinitrile or 1,2,3-tris-(2-cyanoethoxy)propane.

According to an embodiment of the present disclosure, the mass of the nitrile compound accounts for 2 wt% to 8 wt% of the total mass of the electrolyte solution, for example, 2 wt%, 2.5 wt%, 3 wt%, 3.5 wt%, 4 wt%, 4.5 wt%, 5 wt%, 5.5 wt%, 6 wt%, 6.5 wt%, 7 wt% or 8 wt%.

According to an embodiment of the present disclosure, the mass of the lithium tetrafluoroborate accounts for 0.1 wt% to 3 wt% of the total mass of the electrolyte solution, for example, 0.1 wt%, 0.2 wt%, 0.3 wt%, 0.4 wt%, 0.5 wt%, 0.6 wt%, 0.8 wt%, 0.9 wt%, 1 wt%, 1.2 wt%, 1.4 wt%, 1.5 wt%, 1.8 wt%, 2 wt%, 2.2 wt%, 2.5 wt%, 2.8 wt% or 3 wt%.

According to an embodiment of the present disclosure, the organic solvent is selected from at least one of ethylene carbonate, propylene carbonate, dimethyl carbonate, diethyl carbonate, ethyl methyl carbonate, propyl propionate or propyl acetate.

According to an embodiment of the present disclosure, the lithium salts are selected from at least one of lithium bis(trifluoromethylsulfonyl)imide, lithium bis(fluorosulfonyl)imide or lithium hexafluorophosphate, and account for 13 wt% to 20 wt% of the total mass of the electrolyte solution.

According to an embodiment of the present disclosure, the electrolyte solution further includes at least one of ethylene carbonate, 1,3-propane sultone, lithium bis(oxalate)borate or lithium difluoro(oxalato)borate, which accounts for 0 to 10 wt% of the total mass of the electrolyte solution.

According to an embodiment of the present disclosure, the positive electrode plate includes a positive electrode current collector and a positive electrode active material layer coated on one or both sides of the positive electrode current collector. The positive electrode active material layer includes a positive electrode active material, a conductive agent and a binder.

According to an embodiment of the present disclosure, the negative electrode plate includes a negative electrode current collector and a negative electrode active material layer coated on one or both sides of the negative electrode current collector. The negative electrode active material layer includes a negative electrode active material, a conductive agent and a binder.

According to an embodiment of the present disclosure, the positive electrode active material is selected from lithium cobalt oxide, or lithium cobalt oxide doped and coated with two or more elements of Al, Mg, Mn, Cr, Ti, or Zr. The chemical formula of the lithium cobalt oxide doped and coated with two or more elements of Al, Mg, Mn, Cr, Ti, or Zr is LixCo_{1-y1-y2-y3-y4}A_{y1}B_{y2}C_{y3}D_{y4}O₂, where 0.95 ≤ x ≤ 1.05, 0.01 ≤ y1 ≤ 0.1, 0.01 ≤ y2 ≤ 0.1, 0 ≤ y3 ≤ 0.1, and 0 ≤ y4 ≤ 0.1. A, B, C, and D are selected from two or more elements of Al, Mg, Mn, Cr, Ti, or Zr.

According to an embodiment of the present disclosure, the lithium cobalt oxide doped and coated with two or more elements of Al, Mg, Mn, Cr, Ti, or Zr has a median particle size D₅₀ of 10 µm to 17 µm, and a specific surface area BET of 0.15 m²/g to 0.45 m²/g.

According to an embodiment of the present disclosure, the negative electrode active material is selected from graphite or a graphite composite material containing 1 wt% to 12 wt% of SiOₓ/C or Si/C, where 0 < x < 2.

According to an embodiment of the present disclosure, the charge cut-off voltage of the battery is at least 4.45 V

The present disclosure has the following beneficial effects.

A separator and a battery including the separator are provided. The battery is a high-voltage battery with high safety performance. The synergy between the separator and the electrolyte solution can effectively improve the safety performance of the battery while taking into account performance of the battery at high and low temperatures. In the present disclosure, the nitrogen-containing phosphate compound is encapsulated in the vinylidene fluoride polymer to form a composite material with a fibrous core-shell structure. When the battery is used at room temperature, the encapsulation structure is stable, the nitrogen-containing phosphate compound is encapsulated in the vinylidene fluoride polymer and stably exists in the separator, without affecting the electrical performance of the battery. In addition, the fibrous vinylidene fluoride polymer can perform excellent at bonding, and tightly bonds the separator to the positive electrode plate and negative electrode plate together, ensuring that the battery does not deform during the cycle.

In addition, when the battery operates in a normal state, the synergy between the additive in the electrolyte solution and the positive and negative electrode plates can also maintain the performance of the battery at high and low temperatures. The nitrile compound can complex on the positive electrode surface to form a thicker and more stable CEI protective film, thereby improving the stability of the positive electrode material at high temperature and high voltage, preventing the electrolyte solution from being oxidized on the positive electrode surface, reducing heat generated by side reactions, and improving the safety performance of the battery. In addition, the lithium tetrafluoroborate can form an extremely strong and low-resistance SEI film on the negative electrode surface, to ensure the escape and embedding of lithium ions, which is beneficial to the performance of the battery at low temperature.

Under the thermal safety test conditions, the battery is at high temperature, which reaches the softening point or even the melting point of the vinylidene fluoride polymer, the tightly encapsulated fibrous structure collapses, and the nitrogen-containing phosphate compound in the core are released and can quickly react with the nitrile compound in the electrolyte solution to form a high-strength polymer protective film on the surface of the positive electrode active material. The polymer protective film can cut off the current or cover the positive electrode surface, resulting in increased resistance and decreased current. In addition, the nitrogen-containing phosphate compound can react with the lithium tetrafluoroborate to decompose into non-flammable liquid membrane phosphoric acid with flame retardant effect, thereby securing the battery.

In summary, the synergy between the separator and the electrolyte solution can effectively improve the safety performance of the battery while taking into account performance of the battery at high and low temperatures.

### DETAILED DESCRIPTION OF THE INVENTION

The present disclosure is further described in detail below with reference to specific embodiments. It should be understood that the following embodiments are merely for the purposes of illustrating and explaining the present disclosure, and should not be construed as limiting the scope of protection of the present disclosure. Any technology implemented based on the foregoing contents of the present disclosure falls within the intended scope of protection of the present disclosure.

Experimental methods used in the following examples are conventional methods, unless otherwise specified. Reagents, materials, and the like used in the following examples are all commercially available, unless otherwise specified.

The lithium-ion batteries in the following examples and comparative examples were all prepared according to the following preparation method, with the only difference being the alternatives of the separator and the electrolyte solution. The specific differences are shown in Table 1.

### (1) Preparation of a positive electrode plate

The positive electrode active material LiCoO2, the binder polyvinylidene fluoride (PVDF), and the conductive agent acetylene black were mixed in a weight proportion of 96.9:1.5:1.6, and N-methylpyrrolidone (NMP) was added. The mixture was stirred under the action of a vacuum stirrer until the mixed system became a positive electrode slurry with uniform fluidity. The positive electrode slurry was evenly coated on an aluminum foil with a thickness of 12 µm. The coated aluminum foil was baked in an oven with 5 different temperature gradients, and then baked in an oven at 120° C for 8 hours, and finally rolled and cut into the required positive electrode plates.

### (2) Preparation of a negative electrode plate

96.5% of artificial graphite negative electrode material by weight, 0.1% of single-walled carbon nanotube (SWCNT) conductive agent by weight, 1% of conductive carbon black (SP) conductive agent by weight, 1% of carboxymethyl cellulose (CMC) binder by weight, and 1.4% of styrene-butadiene rubber (SBR) binder by weight were prepared into a slurry by a wet process. The slurry was coated on the surface of the negative electrode current collector copper foil, which then was baked (temperature: 85°C, time: 5h), rolled and die-cut into negative electrode plates.

### (3) Preparation of an electrolyte solution

In a glovebox filled with argon (water < 10 ppm, oxygen < 1 ppm), ethylene carbonate (EC), propylene carbonate (PC), propyl propionate (PP), and ethyl propionate (EP) were mixed at a mass proportion of 2:1:5:2. 14 wt% of LiPF₆ to the total mass of the electrolyte solution and the additive (specific amounts and alternatives of the additive are shown in Table 1) were slowly added to the mixed solution, which was then stirred uniformly to obtain the electrolyte solution.

### (4) Preparation of a separator

A polyethylene substrate with a thickness of 5 µm was coated with a layer of ceramic slurry on one surface. The ceramic slurry consists of 80 wt% of alumina, 13.3 wt% of polymethyl methacrylate, 5.3 wt% of carboxymethyl cellulose, and 1.4 wt% of polyvinyl alcohol. The polyethylene substrate with the ceramic slurry was then baked. The thickness of the ceramic layer after drying was 2.0 µm, and the separator coated with a ceramic layer was obtained.

PVDF-HFP with a melting point of 128°C and a weight-average molecular weight of 230,000 and a nitrogen-containing phosphate compound were dissolved in an organic solvent N-methylpyrrolidone in a certain mass ratio (the specific amount and alternatives are shown in Table 1) to form a polymer solution with a certain viscosity. The solid content of the solution is 12%. The composite material with a fibrous core-shell structure was obtained by electrospinning, and was evenly coated on the two outer surfaces of the separator coated with a ceramic layer. A voltage applied to the needle was 15 kV. The composite material with a fibrous core-shell structure coated on the two outer surfaces of the separator with a ceramic layer was quickly baked at a high wind speed with 75°C to obtain an adhesive layer. The thickness of the two adhesive layers was 1.5µm. The separator specifications were 1.5+5+2+1.5. The diameter of the composite material with a fibrous core-shell structure is approximately 0.7 µm. The length-to-diameter ratio of the composite material with a fibrous core-shell structure ranges from 55 to 180.

### (5) Preparation of a lithium-ion battery

The prepared positive electrode plate, separator, and negative electrode plate were wound to obtain a bare cell without liquid injection. The bare cell is placed in an outer packaging foil. The prepared electrolyte solution was injected into the dried bare cell, and the desired lithium-ion battery was obtained after vacuum packaging, standing, formation, shaping, sorting and other processes.

**Table 1 Composition of lithium ion batteries prepared in Comparative Example 1 and Examples 1-12**

| | Composition of separator | | Composition of electrolyte solution | |
|---|---|---|---|---|
| | PVDF-HFP | Nitrogen-containing phosphate compound | Nitrile compound | Lithium tetrafluoroborate |
| Comparative Example 1 | 100.0% | / | 3% of adiponitrile | 0.5% |
| Example 1 | 50.0% | 50% of formula 1-1 | 3% of adiponitrile | 0.5% |
| Example 2 | 20.0% | 80% of formula1-2 | 2% 1,3,6-hexanetrinitrile | 3% |
| Example 3 | 60.0% | 40% of formula1-4 | 2% of adiponitrile+3%1,3,6-hexanetrinitrile | 0.8% |
| Example 4 | 30.0% | 70% of formula1-3 | 3%1,3,6-hexanetrinitrile | 2% |
| Example 5 | 80.0% | 20% of formula1-6 | 3% of ethylene glycol bis(propionitrile) ether+2.5% of succinonitrile+2.5% of adiponitrile | 0.1% |
| Example 6 | 40.0% | 60% of formula1-5 | 2% of adiponitrile+2% of ethylene glycol bis(propionitrile) ether | 1.5% |
| Example 7 | 70.0% | 30% of formula1-1 | 3.5% of succinonitrile+2.5% of adiponitrile | 0.2% |
| Example 8 | 60.0% | 40% of formula1-2 | 2% of ethylene glycol bis(propionitrile) ether+2.5%1,3,6-hexanetrinitrile | 0.4% |
| Example 9 | 10.0% | 90% of formula1-1 | 3% of adiponitrile | 0.5% |
| Example 10 | 50.0% | 50% of formula1-1 | / | 0.5% |
| Example 11 | 50.0% | 50% of formula1-1 | 3% of adiponitrile | / |
| Example 12 | 20.0% | 80% of formula1-1 | 3% of adiponitrile | 0.5% |

The electrochemical performance of the lithium-ion batteries obtained in the above examples and comparative examples was tested, as shown below.
(1) 45°C cycling test: the battery obtained in the above examples and comparative examples was placed in a (45±2)°C environment and left to stand for 2-3 hours. When the battery body reached (45±2)°C, the battery was charged at a 1C constant current to a cut-off current is 0.05C, and the battery was fully charged. After left for 5 minutes, the battery was discharged at a constant current of 0.5C to a cut-off voltage of 3.0 V The highest discharge capacity in the first three cycles is recorded as an initial capacity Q. When the cycling reaches the required number of times, the last discharge capacity Q1 of the battery is recorded. The recorded results are shown in Table 2.

The calculation formula used here is as follows: capacity retention rate (%) = Q1/Q×100%.

(2) Low temperature discharge test: the battery obtained in the above examples and comparative examples was first discharged at 0.2C to 3.0 V at an ambient temperature of (25±3)°C and left for 5 min, and then was charged at 0.7C. When the battery terminal voltage reached the charge limit voltage, the batteries switched to be charged at a constant voltage until the charging current is less than or equal to the cut-off current. Then the battery stopped charging and was left for 5 minutes, and subsequently discharged to 3.0 V at 0.2C. The discharge capacity is recorded as the normal temperature capacity Q2. Then the battery was charged at 0.7C. When the battery terminal voltage reached the charge limit voltage, the battery was switched to be charged at a constant voltage until the charging current is less than or equal to the cut-off current, and stopped charging. After placed at (-10±2)°C for 4h, the fully charged battery was discharged at 0.5C to a cut-off voltage of 3.0 V. The discharge capacity Q3 is recorded and the discharge capacity retention rate at low temperature can be calculated. The recorded results are shown in Table 2.

The discharge capacity retention rate (%) of the battery at low temperature = Q3/Q2 × 100%.

(3) 150°C thermal shock test: the battery obtained in the above examples and comparative examples was heated by convection or a hot air circulation oven from a starting temperature of (25±3)°C to (150±2)°C at a temperature gradient of (5±2)°C/min. The test ended after maintaining for 60 min. The battery status is recorded as shown in Table 2.

(4) Overcharge test: the battery obtained in the examples and comparative examples was charged at a constant current of 3C to 5V and the battery status was recorded. The recorded results are shown in Table 2.

(5) Nail puncture test: a high-temperature resistant steel nail with a diameter φ of 5-8 mm (where a cone angle of the nail tip ranges from 45°C to 60°C, and the surface of the nail is smooth and free of rust, oxide layer and oil stains) pierced the battery obtained in the above examples and comparative examples at a speed of (25±5) mm/s along a direction perpendicular to the electrode plate of the battery. The position of piercing the battery is preferably close to the geometric center of the piercing surface (where the steel nail stays in the battery). When the observation lasts for 1 hour or the highest temperature on the battery surface drops to 10°C or below the peak temperature, the test ended and the battery status was recorded. The recorded results are shown in Table 2.

(6) Heavy impact test: the battery obtained in the above examples and comparative examples was placed in an environment of 25°C ± 5°C, charged to the upper voltage limit at 0.7C, with a cut-off current of 0.025C, and left to stand for 10 minutes. The battery was placed on the surface of the heavy impact test platform, and a metal rod with a diameter of 15.8mm ± 0.2mm was placed horizontally on the upper surface of the geometric center of the battery. A weight of 9.1kg ± 0.1kg fell freely from a height of 610mm ± 25mm to hit the battery surface with the metal rod. The battery status was observed for 6 hours and recorded. The recorded results are shown in Table 2.

**Table 2 Test results of the batteries obtained in Comparative Example 1 and Examples 1-12**

| Groups | Capacity retention rate after 400 cycles at 45°C and 1C | Discharge capacity retention rate at - 10°C and 0.5C | 150°C thermal shock | | Overcharge test at 3C-5V | | Nail puncturing | | Heavy impact | |
|---|---|---|---|---|---|---|---|---|---|---|
| | | | Fire (Passed/ Tested) | Explosio n (Passed/ Tested) | Fire (Passed/ Tested) | Explosion (Passed/ Tested) | Fire (Passed/ Tested) | Explosion (Passed/ Tested) | Fire (Passed/ Tested) | Explosion (Passed/ Tested) |
| Comparative Example 1 | 70.33% | 72.18% | 0/5 | 1/5 | 1/5 | 1/5 | 1/5 | 0/5 | 0/5 | 0/5 |
| Example 1 | 71.16% | 70.56% | 5/5 | 5/5 | 5/5 | 5/5 | 5/5 | 5/5 | 5/5 | 5/5 |
| Example 2 | 72.06% | 75.28% | 5/5 | 5/5 | 5/5 | 5/5 | 5/5 | 5/5 | 5/5 | 5/5 |
| Example 3 | 76.02% | 73.48% | 5/5 | 5/5 | 5/5 | 5/5 | 5/5 | 5/5 | 5/5 | 5/5 |
| Example 4 | 71.08% | 74.14% | 5/5 | 5/5 | 5/5 | 5/5 | 5/5 | 5/5 | 5/5 | 5/5 |
| Example 5 | 78.35% | 70.51% | 5/5 | 5/5 | 5/5 | 5/5 | 5/5 | 5/5 | 5/5 | 5/5 |
| Example 6 | 77.31% | 76.15% | 5/5 | 5/5 | 5/5 | 5/5 | 5/5 | 5/5 | 5/5 | 5/5 |
| Example 7 | 79.28% | 71.10% | 5/5 | 5/5 | 5/5 | 5/5 | 5/5 | 5/5 | 5/5 | 5/5 |
| Example 8 | 76.13% | 77.44% | 5/5 | 5/5 | 5/5 | 5/5 | 5/5 | 5/5 | 5/5 | 5/5 |
| Example 9 | 66.10% | 67.08% | 3/5 | 3/5 | 3/5 | 3/5 | 3/5 | 4/5 | 3/5 | 4/5 |
| Example 10 | 50.28% | 68.27% | 2/5 | 1/5 | 1/5 | 1/5 | 1/5 | 1/5 | 1/5 | 1/5 |
| Example 11 | 55.56% | 57.83% | 2/5 | 2/5 | 3/5 | 3/5 | 2/5 | 2/5 | 3/5 | 2/5 |
| Example 12 | 68.10% | 69.08% | 5/5 | 5/5 | 5/5 | 5/5 | 5/5 | 5/5 | 5/5 | 5/5 |

It can be seen from the examples and comparative examples that, with the synergy between the separator and the electrolyte solution, the prepared lithium-ion battery can effectively improve the safety performance while taking into account performance of the battery at high and low temperatures. In addition, it can be seen from the comparison between Example 9 and Example 1 that the case that the mass ratio of the amount of PVDF-HFP to the amount of nitrogen-containing phosphate compound added in the adhesive layer exceeds a range of 0.25~4 may cause an increase in side reactions, which may lead to the weakening of this synergy.

Embodiments of the present disclosure have described above. However, the present disclosure is not limited to the above embodiments. Any modifications, equivalent replacements, improvements, etc. made within the principles of the present disclosure shall be included in the protection scope of the present disclosure.

## Claims

1. A separator, **characterized in that** the separator comprises a substrate, a ceramic layer and an adhesive layer, the ceramic layer is disposed on a first surface of the substrate, the adhesive layer is disposed on a second surface, opposite to the first surface, of the substrate and on a surface of the ceramic layer, or the ceramic layer is disposed on the first surface and the second surface opposite to the first surface of the substrate, and the adhesive layer is disposed on surfaces of the ceramic layer;
the adhesive layer is made of composite material with a fibrous core-shell structure, the fibrous core-shell structure comprises a fibrous core and a shell that envelops the fibrous core, the shell is made of material comprising vinylidene fluoride polymer, and the fibrous core is made of material including nitrogen-containing phosphate compound.

2. The separator according to claim 1, **characterized in that** the vinylidene fluoride polymer is selected from one or more of polyvinylidene fluoride, polyvinylidene fluoride-hexafluoropropylene copolymer, vinylidene fluoride-trifluoroethylene copolymer, or vinylidene fluoride-tetrafluoroethylene copolymer.

3. The separator according to claim 1 or 2, **characterized in that** a mass ratio of the shell to the fibrous core is 0.25-4:1, preferably 0.5-3:1.

4. The separator according to any one of claims 1 to 3, **characterized in that** a melting point of the vinylidene fluoride polymer ranges from 90°C to 140°C; and/or
a weight average molecular weight of the vinylidene fluoride polymer ranges from 100,000 to 1,000,000.

5. The separator according to any one of claims 1 to 4, **characterized in that** a diameter of the composite material with a fibrous core-shell structure ranges from 0.1 µm to 3 µm; and/or,
a length-to-diameter ratio of the composite material with a fibrous core-shell structure ranges from 10 to 10,000.

6. The separator according to any one of claims 1 to 5, **characterized in that** the nitrogen-containing phosphate compound has a structural formula shown in Formula 1: 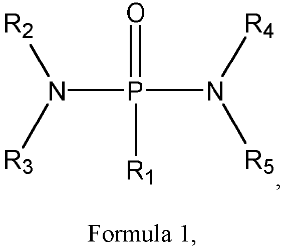
in Formula 1, R₁ is selected from substituted or unsubstituted amino, substituted or unsubstituted C₁₋₁₀ alkoxy, halogen, substituted or unsubstituted nitrogen-containing heterocyclic group, and a substituent is C₁₋₁₀ alkyl or C₆₋₁₀ aryl;
R₂ and R₃ are the same or different and are independently selected from substituted or unsubstituted C₁₋₁₀ alkyl, substituted or unsubstituted C₂₋₁₀ alkenyl, substituted or unsubstituted C₂₋₁₀ alkynyl, or C₆₋₁₀ aryl, and a substituent is C₁₋₁₀ alkyl or halogen; or R₂ and R₃ are connected to each other to form a substituted or unsubstituted nitrogen-containing heterocyclic group, or a substituted or unsubstituted nitrogen-containing sulfur heterocyclic group; and
R₄ and R₅ are the same or different and are independently selected from substituted or unsubstituted C₁₋₁₀ alkyl, substituted or unsubstituted C₂₋₁₀ alkenyl, substituted or unsubstituted C₂₋₁₀ alkynyl, or C₆₋₁₀ aryl, and a substituent is C₁₋₁₀ alkyl or halogen; or R₄ and R₅ are connected to each other to form a substituted or unsubstituted nitrogen-containing heterocyclic group, or a substituted or unsubstituted nitrogen-containing sulfur heterocyclic group.

7. The separator according to claim 6, **characterized in that**, in Formula 1, R₁ is selected from substituted or unsubstituted amino, substituted or unsubstituted C₁₋₆ alkoxy, halogen, substituted or unsubstituted nitrogen-containing 3- to 6- membered heterocyclic group, and a substituent is C₁₋₆ alkyl or C₆₋₈ aryl;
R₂ and R₃ are the same or different and are independently selected from substituted or unsubstituted C₁₋₆ alkyl, substituted or unsubstituted C₂₋₆ alkenyl, substituted or unsubstituted C₂₋₆ alkynyl, or C₆₋₈ aryl, and a substituent is C₁₋₆ alkyl or halogen; or R₂ and R₃ are connected to each other to form a substituted or unsubstituted nitrogen-containing 3- to 6- membered heterocyclic group, or a substituted or unsubstituted nitrogen-sulfur-containing 3- to 6- membered heterocyclic group; and
R₄ and R₅ are the same or different and are independently selected from substituted or unsubstituted C₁₋₆ alkyl, substituted or unsubstituted C₂₋₆ alkenyl, substituted or unsubstituted C₂₋₆ alkynyl, or C₆₋₈ aryl, and a substituent is C₁₋₆ alkyl or halogen; or R₄ and R₅ are connected to each other to form a substituted or unsubstituted nitrogen-containing 3- to 6- membered heterocyclic group, or a substituted or unsubstituted nitrogen-sulfur -containing 3- to 6- membered heterocyclic group.

8. The separator according to claim 6 or 7, **characterized in that** in Formula 1, R₁ is selected from substituted or unsubstituted amino, halogen, or substituted or unsubstituted nitrogen-containing 3 membered heterocyclic group, and a substituent is C₁₋₄ alkyl or phenyl;
R₂ and R₃ are the same or different and are independently selected from substituted or unsubstituted C₁₋₄ alkyl, substituted or unsubstituted C₂₋₃ alkenyl, substituted or unsubstituted C₂₋₃ alkynyl, or phenyl, and a substituent is C1-3 alkyl or a halogen; or R₂ and R₃ are connected to each other to form a substituted or unsubstituted nitrogen-containing 3 membered heterocyclic group or a substituted or unsubstituted nitrogen-sulfur-containing 5 membered heterocyclic group; and
R₄ and R₅ are the same or different and are independently selected from substituted or unsubstituted C₁₋₄ alkyl, substituted or unsubstituted C₂₋₃ alkenyl, substituted or unsubstituted C2-3 alkynyl, or phenyl, and a substituent is C₁₋₃ alkyl or halogen; or R₄ and R₅ are connected to form a substituted or unsubstituted nitrogen-containing 3 membered heterocyclic group, or a substituted or unsubstituted nitrogen-sulfur-containing 5 membered heterocyclic group.

9. The separator according to any one of claims 6 to 8, **characterized in that** in Formula 1, R₁ is selected from substituted amino, fluorine, or a nitrogen-containing 3 membered heterocyclic group, and a substituent is methyl, ethyl, propyl, butyl, or phenyl;
R₂ and R₃ are the same or different and are independently selected from methyl, ethyl, propyl, butyl, allyl, or phenyl; and R₂ and R₃ are connected to form a nitrogen-containing 3 membered heterocyclic group or a nitrogen-sulfur-containing 5 membered heterocyclic group; and
R₄ and R₅ are the same or different and are independently selected from methyl, ethyl, propyl, butyl, allyl, or phenyl; and R₄ and R₅ are connected to form a nitrogen-containing 3 membered heterocyclic group or a nitrogen-sulfur-containing 5 membered heterocyclic group.

10. The separator according to any one of claims 6 to 9, **characterized in that** the nitrogen-containing phosphate compound is selected from at least one of compounds shown in Formula 1-1 to Formula 1-6:

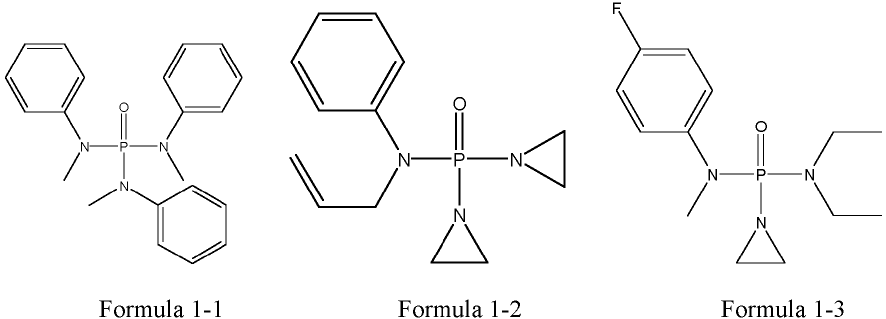

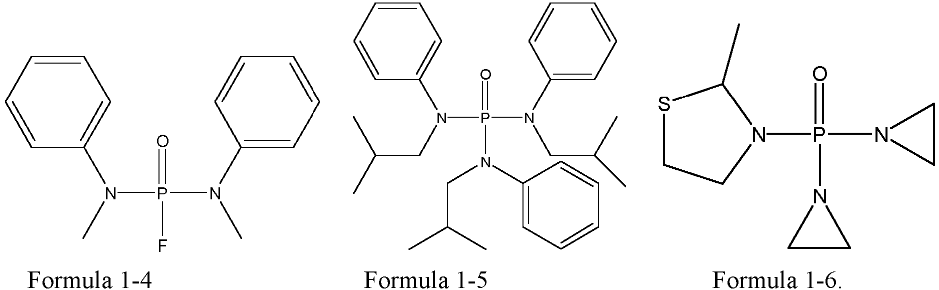

11. A battery, **characterized by** comprising the separator according to any one of claims 1 to 10.

12. The battery according to claim 11, **characterized in that** the battery further comprises a positive electrode plate, a negative electrode plate and an electrolyte solution; and the electrolyte solution comprises an organic solvent, an additive and lithium salts, wherein the additive comprises a nitrile compound and lithium tetrafluoroborate.

13. The battery according to claim 12, **characterized in that** the nitrile compound is selected from at least one of 3-methoxypropionitrile, succinonitrile, adiponitrile, ethylene glycol bis(propionitrile) ether, 1,3,6-hexanetrinitrile or 1,2,3-tris-(2-cyanoethoxy)propane;
a mass of the nitrile compound accounts for 2 wt% to 8 wt% of a total mass of the electrolyte solution; and a mass of the lithium tetrafluoroborate accounts for 0.1 wt% to 3 wt% of the total mass of the electrolyte solution.

14. The battery according to claim 12 or 13, **characterized in that** the organic solvent is selected from at least one of ethylene carbonate, propylene carbonate, dimethyl carbonate, diethyl carbonate, ethyl methyl carbonate, propyl propionate or propyl acetate; and/or
the lithium salts are selected from at least one of lithium bis(trifluoromethylsulfonyl)imide, lithium bis(fluorosulfonyl)imide or lithium hexafluorophosphate.

15. The battery according to any one of claims 12 to 14, **characterized in that** the electrolyte solution further comprises at least one of ethylene carbonate, 1,3-propane sultone, lithium bis(oxalate)borate or lithium difluoro(oxalato)borate.
